# EUROPEAN PATENT SPECIFICATION

(11) **EP 4 075 742 B1**
(45) Date of publication and mention of the grant of the patent: **18.12.2024**
(21) Application number: 21168248.9
(22) Date of filing: 14.04.2021
(51) Int. Cl.: H04L 47/52, H04L 47/34, H04L 47/25

(54) **SYSTEM AND METHOD FOR MULTIPATH TRANSMISSION WITH EFFICIENT ADJUSTABLE RELIABILITY**
SYSTEM UND VERFAHREN ZUR MEHRWEGÜBERTRAGUNG MIT EFFIZIENTER EINSTELLBARER ZUVERLÄSSIGKEIT
SYSTÈME ET PROCÉDÉ DE TRANSMISSION PAR TRAJETS MULTIPLES À FIABILITÉ RÉGLABLE ET EFFICACE

(43) Date of publication of application: 19.10.2022
(73) Proprietor: Deutsche Telekom AG, 53113 Bonn (DE)
(72) Inventor: AMEND, Markus, 63667 Nidda (DE); BOGENFELD, Eckard, 67316 Carlsberg (DE); BRUNSTROM, Anna, 65637 Karlstad (SE); PIESKA, Marcus, 65464 Karlstad (SE); KASSLER, Andreas, 65635 Karlstad (SE)
(74) Representative: Vossius & Partner Patentanwälte Rechtsanwälte mbB

(56) References cited:
- EP-A1- 3 544 332
- WO-A1-2018/112657
- US-A1- 2020 145 725

## Description

The invention relates to a method and system comprising a transmitting device and a receiving device, the transmitting device comprises a multipath traffic scheduler and the receiving device comprises a reordering module, as defined in the independent claims.

### Background of the Invention

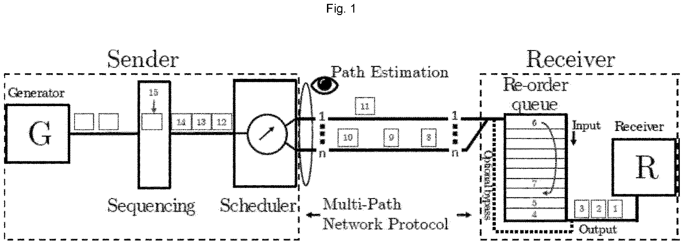

Multipath network protocols such as MPTCP [1], MP-DCCP [3] or MP-QUIC [2] allow to establish more than one communication flow between a sender and a receiver. Fig. 1 shows a sender, i.e. a transmitting device, and a receiver (receiving device). Multiple paths 1 to n are established between the sender and the receiver. A generator generates data packets 1 to 15 that pass a sequencing module which assigns each packet a respective sequence number. The sequenced data packets are passed to a scheduler which schedules the data packets to the multiple paths of a multipath channel. The data packets ordered in sequence 12, 13, 14 are transmitted over the multipath channel and are queued in a reorder queue at the receiver side where they arrive at an input of the reorder queue. In the reorder queue the data packets are reordered and reordered data packets (such as 1, 2, 3) are provided at an output to the receiver.

On sender side that gives the ability to decide how to schedule the traffic across these communication paths1-n depicted in Fig. 1. An efficient scheduling is relied on a proper path estimation, which characterizes the transport capabilities of the communication paths like available bandwidth or Round-Trip-Time. Using [1]-[3], will gain these values from the employed congestion control approach like New Reno, Cubic, BBR etc.

While on sender side traffic is split across communication paths, the receiver side usually has to take care to re-assemble the formerly split traffic and reconstruct the order of sequence. Out-of-order delivery occurs at the receiver due to communication flows with distinct transport characteristics of latency, error rate and bandwidth. In order to reconstruct the order of sequence a re-order queue is used to compensate for those varying transport characteristics. A possibly entity therefore is described in [4].

With the increasing number of used communication flows in a multipath system the probability for packet loss might be higher than the one over single path and impact the E2E performance from services carried over the multipath system. Independent from that, the reconstruction of the packet sequence at the multipath receiver side undergoes a challenge each time it has to deal with lost information.

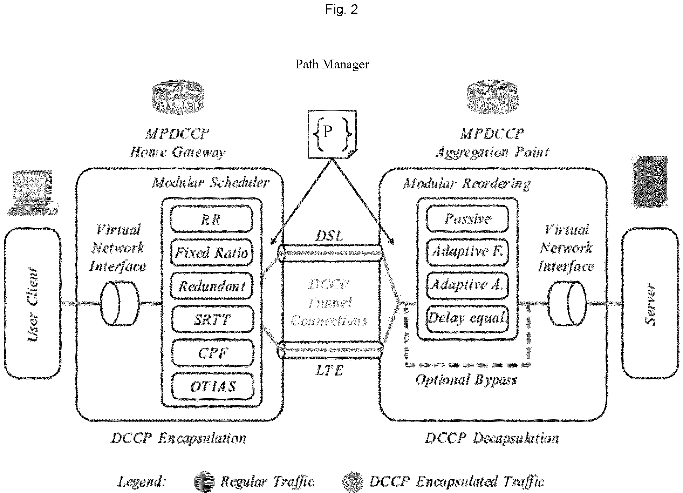

This becomes mainly an issue for multipath architectures, which are based on unreliable network protocols as depicted in Fig. 2. This one relies on MP-DCCP for multipath transmission of an E2E service between Client and Server. The Virtual Network Interface will ensure the E2E service communication over multiple paths by forwarding the traffic over the MP-DCCP system. That is, any information routed/send through the VNIF will be dispatched to the MP-DCCP system where it becomes encapsulated and scheduled across the DCCP communication paths. On the MP-DCCP receiver side the encapsulated information passes a reordering process and the original information - after removing the encapsulation overhead - exits the VNIF to become forwarded to the original destination. Two communication flows "DSL" and "LTE" are assumed here, as depicted in Fig. 2. Per se, lost packets are not re-transmitted due to the unreliable nature of DCCP.

A similar framework employing the QUIC protocol [9] is implementable using the MP-QUIC [2] instead of MP-DCCP, the work at QUIC MASQUE [7] for encapsulation (VNIF) and QUIC DATAGRAM [8] for unreliable transmission - the nature of DCCP.

Selecting MPTCP [1] or [5] as multipath network protocol would solve the demand on strict reliability since that is an integral part of the underlying TCP. However, it let not select the degree of reliability.

As of today, and according to the above description, only multipath architectures with multipath network protocols are known which let select strict reliability or no reliability at all. Transitional solutions and dynamic adjustments are not foreseen. E2E services which may profit from a loss recovery within the multipath system, but in a less restrictive way than it is with [1] or [5], cannot benefit at all.

WO 2018/112657 A1 relates to a network gateway for routing data flows across a plurality of network connections, the network gateway including a plurality of network interfaces for transmitting data over the plurality of network connections. The plurality of network interfaces include: a first network interface and at least one processor configured for: transmitting a sequential burst of packets across the first network interface; based on timestamps recorded when packets in the sequential burst of packets are received at a receiving node, and the size of the packets, generating a bandwidth of the first network interface; and routing a data flow of sequential packets across the plurality of network connections based on the generated bandwidth of the first network interface. EP 3 544 332 A1 relates to techniques for scheduling multipath data traffic.

It is the object of the present invention to provide a concept for solving the above-mentioned problem when transmitting data packets over a multipath channel. A further object of the present invention is to introduce a concept for an efficient and partial reliable reordering for packet transmission in multipath scenarios which is not based on strict reliability. These objects are achieved with the features of the claims.

### Summary of the Invention

The invention is defined in independent claims 1 and 11. Preferred or advantageous aspects are defined in the dependent claims.

According to a first aspect, the invention provides a system as defined by the independent claim 1.

Preferably, transmission over at least two paths is performed through a tunnel connection using a Virtual Network Interface, VNI.

The send-buffer preferably is a path individual send-buffer for each of the two or more paths.

Each path individual send-buffer is configured to temporarily store the transmitted packets, through its respective path, for a predetermined amount of time.

The reordering module is further configured to send an acknowledgment to the transmitting device, if a packet is received successfully.

The reordering module is further configured to send a negative-acknowledgment to the transmitting device, if a packet is detected outstanding.

Preferably, the transmitting device is further configured to receive the acknowledgement and/or negative-acknowledgement sent by the receiving device, and to delete the acknowledged received packet from the send-buffer.

According to a preferred embodiment, if no acknowledgement and/or negative-acknowledgement is received for one or more transmitted packets, the transmitting device is configured to check whether the non-acknowledged one or more transmitted packets are stored in the send-buffer, and to resend each stored non-acknowledged transmitted packet at a configurable time.

The receiving device is further configured to initiate by the reordering module a resend-request to the transmitting device based on a monitoring of sequence identifiers received.

The reordering module is preferably configured to perform adjustable packet loss detection by using latency information such as Round-Trip Time, RTT, or one-way-latency.

According to a further preferred embodiment, the time how long packets are kept in the send-buffer is statically or dynamically determined by receipt of acknowledgment, ACK, information and/or negative-acknowledgement, NACK, information and/or BDP dependent and/or based on a static value and/or buffer level dependent and/or latency dependent.

According to a further preferred embodiment, the multipath-traffic scheduler is configured to re-send packets over a path different to the original path.

According to a further preferred embodiment, the multipath-traffic scheduler is combined with one of the multipath protocols MP-DCCP, MP-QUIC, SCTP.

According to a second aspect, the invention provides a method of multi-path transmission of packets in a communication system from a transmitting device to a receiving device as defined by the independent claim 11.

Preferably, the send-buffer is a path individual send-buffer for each of the two or more paths.

More preferably, each path individual send-buffer is configured to temporarily store the transmitted packets, through its respective path, for a predetermined amount of time.

According to a further preferred embodiment, the multipath-traffic scheduler re-sends packets over a path different to the original path.

Preferably, the method further comprises initiating by the reordering module a resend-request to the transmitting device based a monitoring of sequence identifiers received.

The reordering module is preferably further configured to send an acknowledgment to the transmitting device, if a packet is received successfully.

Preferably, the reordering module is further configured to send a negative-acknowledgement to the transmitting device, if a packet is detected outstanding.

Preferably, the transmitting device is further configured to receive the acknowledgement and/or negative-acknowledgement sent by the receiving device, and to delete the acknowledged received packet from the send-buffer.

According to a preferred embodiment, if no acknowledgement and/or negative-acknowledgement is received for one or more transmitted packets, the transmitting device is configured to check whether the non-acknowledged one or more transmitted packets are stored in the send-buffer, and to resend each stored non-acknowledged transmitted packet at a configurable time.

The reordering module is preferably configured to perform adjustable packet loss detection by using latency information such as Round-Trip Time, RTT, or one-way-latency.

According to a further preferred embodiment, the time how long packets are kept in the send-buffer is statically or dynamically determined by receipt of acknowledgement, ACK, information and/or negative-acknowledgement, NACK, information and/or BDP dependent and/or based on a static value and/or buffer level dependent and/or latency dependent.

According to a further preferred embodiment, the multipath-traffic scheduler is combined with one of the multipath protocols MP-DCCP, MP-QUIC, SCTP.

The methods and systems presented below may be of various types. The individual elements described may be realized by hardware or software components, for example electronic components that can be manufactured by various technologies and include, for example, semiconductor chips, ASICs, microprocessors, digital signal processors, integrated electrical circuits, electro-optical circuits and/or passive components

The devices, systems and methods presented below are capable of transmitting information over a communication network. The term communication network refers to the technical infrastructure on which the transmission of signals takes place. The communication network essentially comprises the switching network in which the transmission and switching of the signals takes place between the stationary devices and platforms of the mobile radio network or fixed network, and the access network in which the transmission of the signals takes place between a network access device and the communication terminal. The communication network can comprise both components of a mobile radio network as well as components of a fixed network. In the mobile network, the access network is also referred to as an air interface and includes, for example, a base station (NodeB, eNodeB, radio cell) with mobile antenna to establish the communication to a communication terminal as described above, for example, a mobile phone or a mobile device with mobile adapter or a machine terminal. In the fixed network, the access network includes, for example, a DSLAM (digital subscriber line access multiplexer) to connect the communication terminals of multiple participants based on wires. Via the switching network the communication can be transferred to other networks, for example other network operators, e.g. foreign networks.

In communications and computing systems, the Open Systems Interconnection model (OSI model) defines a conceptual model that characterizes and standardizes the communication functions without regard to its underlying internal structure and technology. Its goal is the interoperability of diverse communication systems with standard protocols. The model partitions a communication system into abstraction layers. The original version of the model defined seven layers: Physical layer (Layer 1), Data Link layer (Layer 2), Network layer (Layer 3), Transport layer (Layer 4), Session layer (Layer 5), Presentation layer (Layer 6) and Application layer (Layer 7).

The invention provides for an adjustable recovery of lost information in a multipath system which is not based on strict reliability like MPTCP. The proposed solution consists at least of a multipath traffic scheduler and a re-order module. It includes the functions of a multipath scheduler with a send buffer for reliability, a tunable degree of re-transmission at the scheduler using parameter x={0 (unreliable) ≤ x ≤ ∞ (reliable)} specifying e.g. the number of re-transmissions.

The present invention provides the benefit that especially in multipath setups like the one shown in Fig. 2, when the multipath transport has shorter latencies than the E2E service, re-transmission is a valuable approach to overcome the impact of packet loss. However, to keep a benefit, a preferred aspect of the invention considers the number of re-transmissions. This intends to avoid a negative reaction of the E2E service like it would be without the present invention.

The present invention has an impact to such multipath systems which are based on multipath network protocols without inherent strict reliability. MPTCP is a protocol that has strict reliability inherited from TCP. Strict reliability ensures that a receiver get hands on exactly the same data stream as originated from the sender. No loss, out-of-order, bit errors are allowed. Since this cannot be weakened without fundamentally changing the TCP protocol, which is not intended by the present invention, the present invention focus on multipath network protocols without strict reliability. For this it is independent if unreliable transmissions are part of the original defined standard (e.g. a IETF RFC), an extension or a self-modified/created protocol.

In a preferred implementation of the invention, MP-DCCP is used as the protocol of choice. By design, DCCP and also the MP-DCCP does not include any reliability, which means it is not ensured in any way that send messages will arrive. However, due to the fact that sent information is acknowledged, the (MP-)DCCP sender is aware about the receive status. That information is used according to the present invention to provide a scheduler with multiple degrees of reliability. Conjunct with that it requires a send buffer, which keeps the already sent information for potential re-transmission. The send buffer is preferably path individual and/or an overall one. Furthermore, the send buffer is preferably already provided along with the selected protocol and/or implementation. Whenever the sender side becomes aware of any outstanding and potentially lost information, the scheduler can decide to resend this information over the same or a subsequent path. In that case the sender has to ensure that the information can be identified on receiver side which information is contained in this re-send information. A re-send is only possible when the concerning information is still buffered. It is up to the implementation how long data is kept in the send buffer(s). Multiple options exist, e.g. as long as data is acknowledged (resembles TCP), BDP dependent, fixed time, fixed volume, latency dependent or other possibilities.

Furthermore, it is up to the scheduler how often identified data will be retransmitted. For example, only once, as long as it is received. Preferably, this is also a question of latency or a latency ratio between paths. So both, the dimension of the send buffer(s) as well as the number of retransmissions, allow the sender to fine tune the degree of reliability, according to a preferred aspect of the invention.

Other multipath protocols, which can be designed in similar ways, are QUIC [9] combined with the DATAGRAM [8] extension, MP-QUIC [2] combined with the DATAGRAM [8] extension, SCTP [10] combined with PR-SCTP [11] or CMT-SCTP [12] with PR-SCTP [11]. All the aforementioned protocols use specific receiver to sender acknowledgement, which is preferably exploited for the present invention as it lets the sender know if an information is received. In the case of PR-SCTP, the degree of reliability can be controlled instructing this extension as such.

An embodiment of the invention without requiring a feedback loop like the protocols above - send data and acknowledge them - is the active request from receiver side or anticipating on sender side re-transmission. The first, i.e., the active request from receiver side is preferably triggered by the re-order module on receiver side, e.g. by sending a NACK (negative acknowledgement) based on monitoring sequence numbers or latency based. On the other hand, anticipation on sender side preferably uses cross layer information to assume a packet loss or bit errors.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

### List of References

[1] A. Ford and C. Raiciu and M. Handley and O. Bonaventure, "TCP Extensions for Multipath Operation with Multiple Addresses", RFC no. 6824, January 2013
[2] Quentin Coninck and Olivier Bonaventure, "Multipath Extensions for QUIC (MP-QUIC)", draft-deconinck-quic-multipath-05, August 2020
[3] Markus Amend and Anna Brunstrom and Andreas Kassler and Veselin Rakocevic, "DCCP Extensions for Multipath Operation with Multiple Addresses", draft-amend-tsvwg-multipath-dccp-03, Nov 2019
[4] Patent "Techniques for efficient reordering of data packets in multipath scenarios", EP3531637B1, Inventors: Markus Amend and Eckard Bogenfeld
[5] Zhang, Wentao & Wu, Qian & Yang, Wang & Li, Hewu. (2010). Reliable Multipath Transfer Scheduling Algorithm Research and Prototype Implementation. Proceedings of the Asia Pacific Advanced etwork. 30. 10.7125/APAN.30.7.
[6] Markus Amend and Eckard Bogenfeld and Anna Brunstrom and Andreas Kassler and Veselin Rakocevic, "A multipath framework for UDP traffic over heterogeneous access networks", draft-amend-tsvwg-multipath-framework-mpdccp-01, January 2020
[7] https://datatracker.ietf.org/wg/masque/about/
[8] T. Pauly and E. Kinnear and D. Schinazi, "An Unreliable Datagram Extension to QUIC", draft-pauly-quic-datagram-05, Nov 2019
[9] J. Iyengar and M. Thomson, "QUIC: A UDP-Based Multiplexed and Secure Transport", draft-ietf-quic-transport-32, 20 October 2020
[10] R. Stewart, "Stream Control Transmission Protocol", RFC no. 4960, September 2007
[11] Michael A. Ramalho and Qiaobing Xie and Randall R. Stewart and Michael Tüxen and Phillip Conrad, "Stream Control Transmission Protocol (SCTP) Partial Reliability Extension", RFC no. 3758, May 2004
[12] Professor Paul D. Amer and Martin Becke and Thomas Dreibholz and Nasif Ekiz and Jana Iyengar and Preethi Natarajan and Randall R. Stewart and Michael Tüxen, "Load Sharing for the Stream Control Transmission Protocol (SCTP)", draft-tuexen-tsvwg-sctpmultipath-20, 28 July 2020.

## Claims

1. A system comprising a transmitting device and a receiving device, the transmitting device comprises a multipath traffic scheduler and the receiving device comprises a reordering module, wherein:
the multipath traffic scheduler is configured to schedule packets for transmission over at least two paths, each transmitted packet comprising a sequence identifier,
the reordering module is configured to receive packets through the two or more paths, and to reorder the received packets sequentially based on the sequence identifier,
wherein
the multipath traffic scheduler comprises a send-buffer configured to temporarily store the transmitted packets for a configurable amount of time; and
the transmitting device is configured to:
resend a transmitted packet not being received by the receiving device;
adjust a number of allowed re-transmissions or adjust the dimension of the send-buffer for adjusting transmission reliability of the system; and
anticipate a packet retransmission from the send buffer, based on cross layer information and/or outstanding acknowledgements, wherein outstanding acknowledgements are negative acknowledgements, and
wherein the multipath traffic scheduler further comprises an interface for external adjustment of the transmission reliability of the system.

2. The system of claim 1, wherein transmission over at least two paths is performed through a tunnel connection using a Virtual Network Interface, VNI.

3. The system of claim 1, or 2, wherein the send-buffer is a path individual send-buffer for each of the two or more paths, and each path individual send-buffer is configured to temporarily store the transmitted packets, through its respective path, for a predetermined amount of time.

4. The system of claim 1, 2 or 3, wherein
the reordering module is further configured to send an acknowledgment and/or negative-acknowledgement to the transmitting device, if a packet is received successfully and/or detected outstanding; and
the transmitting device is further configured to receive the acknowledgement and/or negative-acknowledgement sent by the receiving device, and to delete the acknowledged received packet from the send-buffer.

5. The system of claim 4, wherein, if no acknowledgement and/or negative-acknowledgement is received for one or more transmitted packets, the transmitting device is configured to check whether the non-acknowledged one or more transmitted packets are stored in the send-buffer, and to resend each stored non-acknowledged transmitted packet at a configurable time.

6. The system of claim 1, 2, or 3, wherein the receiving device is configured to initiate by the reordering module a resend-request to the transmitting device based on a monitoring of sequence identifiers received.

7. The system of any one of claims 1 to 6, wherein the reordering module is configured to perform adjustable packet loss detection by using latency information such as Round-Trip Time, RTT, or one-way-latency.

8. The system of any of claims 1 to 6, wherein the time how long packets are kept in the send-buffer is statically or dynamically determined by receipt of acknowledgement, ACK, information and/or negative-acknowledgement, NACK, information and/or Bandwidth Delay-Product, BDP, dependent and/or based on a static value and/or buffer level dependent and/or latency dependent.

9. The system of any one of claims 1 to 8, wherein the multipath-traffic scheduler is configured to re-send packets over a path different to the original path.

10. The system of any one of claims 1 to 9, wherein the multipath-traffic scheduler is combined with one of the protocols Multi-Path-Datagram Congestion Control Protocol, MP-DCCP, MultiPath Quick UDP Internet Connections, MP-QUIC, User Datagram Protocol, UDP, IP-in-IP, Generic Routing Encapsulation, GRE, Tunnel Bonding.

11. A method of multi-path transmission of packets in a communication system from a transmitting device to a receiving device, the transmitting device comprising a multipath traffic scheduler and the receiving device comprising a reordering module, the method comprising:
scheduling packets, by the multipath traffic scheduler, for transmission over at least two paths, each transmitted packet comprising a sequence identifier,
temporarily storing the transmitted packets at the multipath traffic scheduler in a send-buffer for a configurable amount of time;
receiving, by the reordering module, packets through the two or more paths, and reordering the received packets sequentially based on the sequence identifier, and
resending, by the transmitting device, a transmitted packet not being received by the receiving device,
adjusting, by the transmitting device, a number of allowed re-transmissions or adjusting the dimension of the send-buffer for adjusting transmission reliability of the system, and
anticipating, by the transmitting device, a packet retransmission from the send buffer, based on cross layer information and/or outstanding acknowledgements, wherein outstanding acknowledgements are negative acknowledgements, and
wherein the multipath traffic scheduler further comprises an interface for external adjustment of the transmission reliability of the system.

12. The system of claim 11, wherein the send-buffer is a path individual send-buffer for each of the two or more paths, and each path individual send-buffer is configured to temporarily store the transmitted packets, through its respective path, for a predetermined amount of time.

13. The system of claim 10 or 11, wherein the multipath-traffic scheduler re-sends packets over a path different to the original path.

## Patentansprüche

1. System mit einer Sendevorrichtung und einer Empfangsvorrichtung, wobei die Sendevorrichtung einen Mehrweg-Verkehrs-Scheduler umfasst und die Empfangsvorrichtung ein Umordnungsmodul umfasst, wobei:
der Mehrweg-Verkehrs-Scheduler dazu ausgelegt ist, Pakete zur Übertragung über zumindest zwei Wege einzuplanen, wobei jedes übertragene Paket eine Sequenzkennung umfasst,
das Umordnungsmodul dazu ausgelegt ist, Pakete über die zwei oder mehr Wege zu empfangen und die empfangenen Pakete auf der Grundlage der Sequenzkennung sequentiell umzuordnen,
wobei
der Mehrweg-Verkehrs-Scheduler einen Sendepuffer umfasst, der dazu ausgelegt ist, die übertragenen Pakete für eine konfigurierbare Zeitspanne vorübergehend zu speichern; und
die Sendevorrichtung dazu ausgelegt ist,
ein übertragenes Paket, das von der Empfangsvorrichtung nicht empfangen wurde, erneut zu senden;
eine Anzahl zulässiger Wiederübertragungen oder die Größe des Sendepuffers einzustellen, um die Übertragungssicherheit des Systems einzustellen; und
eine Paket-Wiederübertragung aus dem Sendepuffer auf der Grundlage von schichtübergreifenden Informationen und/oder ausstehenden Bestätigungen zu antizipieren, wobei ausstehende Bestätigungen Negativ-Bestätigungen sind, und
wobei der Mehrweg-Verkehrs-Scheduler ferner eine Schnittstelle zur externen Einstellung der Übertragungssicherheit des Systems umfasst.

2. System nach Anspruch 1, wobei die Übertragung über zumindest zwei Wege durch eine Tunnelverbindung unter Verwendung einer virtuellen Netzwerkschnittstelle (Virtual Network Interface, VNI) erfolgt.

3. System nach Anspruch 1 oder 2, wobei der Sendepuffer ein wegindividueller Sendepuffer für jeden der zwei oder mehr Wege ist und jeder wegindividuelle Sendepuffer dazu ausgelegt ist, die über seinen jeweiligen Weg übertragenen Pakete für eine vorbestimmte Zeitspanne vorübergehend zu speichern.

4. System nach Anspruch 1, 2 oder 3, wobei
das Umordnungsmodul ferner dazu ausgelegt ist, eine Bestätigung und/oder Negativ-Bestätigung an die Sendevorrichtung zu senden, wenn ein Paket erfolgreich empfangen und/oder als ausstehend erkannt wird; und
die Sendevorrichtung ferner dazu ausgelegt ist, die von der Empfangsvorrichtung gesendete Bestätigung und/oder Negativ-Bestätigung zu empfangen und das bestätigte empfangene Paket aus dem Sendepuffer zu löschen.

5. System nach Anspruch 4, wobei dann, wenn keine Bestätigung und/oder Negativ-Bestätigung für ein oder mehrere übertragene Pakete empfangen wird, die Sendevorrichtung dazu ausgelegt ist, zu prüfen, ob das eine oder die mehreren übertragenen, nicht bestätigten Pakete im Sendepuffer gespeichert sind, und jedes übertragene, nicht bestätigte, gespeicherte Paket zu einem konfigurierbaren Zeitpunkt erneut zu senden.

6. System nach Anspruch 1, 2 oder 3, wobei die Empfangsvorrichtung dazu ausgelegt ist, durch das Umordnungsmodul eine erneute Sendeanforderung an die Sendevorrichtung auf der Grundlage einer Überwachung der empfangenen Sequenzkennungen zu initiieren.

7. System nach einem der Ansprüche 1 bis 6, wobei das Umordnungsmodul dazu ausgelegt ist, eine einstellbare Erfassung von Paketverlusten unter Verwendung von Latenzzeitinformationen wie Round-Trip-Time, RTT, oder Einweg-Latenzzeit durchzuführen.

8. System nach einem der Ansprüche 1 bis 6, wobei die Zeit, wie lange Pakete im Sendepuffer gehalten werden, durch den Empfang von Bestätigungsinformationen, ACK, und/oder Negativ-Bestätigungsinformationen, NACK, und/oder abhängig von dem Verzögerungs-Bandbreiten-Produkt (BDP) und/oder basierend auf einem statischen Wert und/oder abhängig vom Pufferpegel und/oder abhängig von der Latenzzeit statisch oder dynamisch bestimmt wird.

9. System nach einem der Ansprüche 1 bis 8, wobei der Mehrweg-Verkehrs-Scheduler dazu ausgelegt ist, Pakete über einen anderen Weg als den ursprünglichen Weg erneut zu senden.

10. System nach einem der Ansprüche 1 bis 9, wobei der Mehrweg-Verkehrs-Scheduler mit einem der Protokolle Multi-Path-Datagram Congestion Control Protocol, MP-DCCP, Multi-Path Quick UDP Internet Connections, MP-QUIC, User Datagram Protocol, UDP, IP-in-IP, Generic Routing Encapsulation, GRE, Tunnel Bonding kombiniert ist.

11. Verfahren zur Mehrweg-Übertragung von Paketen in einem Kommunikationssystem von einer Sendevorrichtung zu einer Empfangsvorrichtung, wobei die Sendevorrichtung einen Mehrweg-Verkehrs-Scheduler umfasst und die Empfangsvorrichtung ein Umordnungsmodul umfasst, wobei das Verfahren umfasst:
Einplanen von Paketen durch den Mehrweg-Verkehrs-Scheduler zur Übertragung über zumindest zwei Wege, wobei jedes übertragene Paket eine Sequenzkennung umfasst,
vorübergehendes Speichern der übertragenen Pakete bei dem Mehrweg-Verkehrs-Scheduler in einem Sendepuffer für eine konfigurierbare Zeitspanne;
Empfangen von Paketen über die zwei oder mehr Wege durch das Umordnungsmodul und sequentielles Umordnen der empfangenen Pakete auf der Grundlage der Sequenzkennung, und
erneutes Senden eines übertragenen Pakets, das von der Empfangsvorrichtung nicht empfangen wurde, durch die Sendevorrichtung,
Einstellen einer Anzahl von zulässigen Wiederübertragungen oder Einstellen der Größe des Sendepuffers durch die Sendevorrichtung, um die Übertragungssicherheit des Systems einzustellen, und
Antizipieren einer Paket-Wiederübertragung aus dem Sendepuffer durch die Sendevorrichtung auf der Grundlage von schichtübergreifenden Informationen und/oder ausstehenden Bestätigungen, wobei ausstehende Bestätigungen Negativ-Bestätigungen sind, und
wobei der Mehrweg-Verkehrs-Scheduler ferner eine Schnittstelle zur externen Einstellung der Übertragungssicherheit des Systems umfasst.

12. System nach Anspruch 11, wobei der Sendepuffer ein wegindividueller Sendepuffer für jeden der zwei oder mehr Wege ist und jeder wegindividuelle Sendepuffer dazu ausgelegt ist, die über seinen jeweiligen Weg übertragenen Pakete für eine vorbestimmte Zeitspanne vorübergehend zu speichern.

13. System nach Anspruch 10 oder 11, wobei der Mehrweg-Verkehrs-Scheduler Pakete über einen anderen Weg als den ursprünglichen Weg erneut sendet.

## Revendications

1. Système comprenant un dispositif de transmission et un dispositif de réception, le dispositif de transmission comprenant un programmateur de trafic à trajets multiples et le dispositif de réception comprenant un module de réordonnancement, dans lequel :
le programmateur de trafic à trajets multiples est configuré pour programmer des paquets pour une transmission sur au moins deux trajets, chaque paquet transmis comprenant un identifiant de séquence,
le module de réordonnancement est configuré pour recevoir des paquets par l'intermédiaire des deux trajets ou plus, et pour réordonner les paquets reçus de manière séquentielle sur la base de l'identifiant de séquence,
dans lequel
le programmateur de trafic à trajets multiples comprend un tampon d'envoi configuré pour stocker temporairement les paquets transmis pendant une quantité de temps configurable ; et
le dispositif de transmission est configuré pour :
renvoyer un paquet transmis qui n'a pas été reçu par le dispositif de réception ;
ajuster un nombre de retransmissions autorisées ou ajuster la dimension du tampon d'envoi pour ajuster la fiabilité de transmission du système ; et
anticiper une retransmission de paquet depuis le tampon d'envoi sur la base d'informations de couche transversale et/ou d'accusés de réception en attente, dans lequel des accusés de réception en attente sont des accusés de réception négatifs, et
dans lequel le programmateur de trafic à trajets multiples comprend en outre une interface pour l'ajustement externe de la fiabilité de transmission du système.

2. Système selon la revendication 1, dans lequel la transmission sur au moins deux trajets est effectuée par l'intermédiaire d'une connexion tunnel en utilisant une VNI [Virtual Network Interface - interface de réseau virtuel].

3. Système selon la revendication 1 ou 2, dans lequel le tampon d'envoi est un tampon d'envoi individuel de trajet pour chacun des deux trajets ou plus, et chaque tampon d'envoi individuel de trajet est configuré pour stocker temporairement les paquets transmis, par l'intermédiaire de son trajet respectif, pendant une quantité de temps prédéterminée.

4. Système selon la revendication 1, 2 ou 3, dans lequel
le module de réordonnancement est en outre configuré pour envoyer un accusé de réception et/ou un accusé de réception négatif au dispositif de transmission, si un paquet est reçu avec succès et/ou est détecté comme étant en attente ; et
le dispositif de transmission est en outre configuré pour recevoir l'accusé de réception et/ou l'accusé de réception négatif envoyés par le dispositif de réception, et pour supprimer le paquet reçu avec accusé de réception du tampon d'envoi.

5. Système selon la revendication 4, dans lequel, si aucun accusé de réception et/ou aucun accusé de réception négatif ne sont reçus pour un ou plusieurs paquets transmis, le dispositif de transmission est configuré pour vérifier si les un ou plusieurs paquets transmis sans accusé de réception sont stockés dans le tampon d'envoi, et pour renvoyer chaque paquet stocké transmis sans accusé de réception à un moment configurable.

6. Système selon la revendication 1, 2 ou 3, dans lequel le dispositif de réception est configuré pour initier par le module de réordonnancement une demande de renvoi au dispositif de transmission sur la base d'une surveillance d'identifiants de séquence reçus.

7. Système selon l'une quelconque des revendications 1 à 6, dans lequel le module de réordonnancement est configuré pour effectuer une détection de perte de paquets ajustable en utilisant des informations de latence telles que le temps d'aller-retour (RTT), ou une latence unidirectionnelle.

8. Système selon l'une quelconque des revendications 1 à 6, dans lequel le temps pendant lequel des paquets sont conservés dans le tampon d'envoi est déterminé de manière statique ou dynamique par la réception d'informations d'accusé de réception [ACK] et/ou d'informations d'accusé de réception négatif [NACK], et/ou en fonction du BDP [Bandwidth Delay- Product -produit bande passante-délai] et/ou sur la base d'une valeur statique et/ou en fonction du niveau de tampon et/ou en fonction de la latence.

9. Système selon l'une quelconque des revendications 1 à 8, dans lequel le programmateur de trafic à trajets multiples est configuré pour renvoyer des paquets sur un trajet différent du trajet d'origine.

10. Système selon l'une quelconque des revendications 1 à 9, dans lequel le programmateur de trafic à trajets multiples est combiné avec un des protocoles MP-DCCP [Multi-Path-Datagram Congestion Control Protocol - protocole de contrôle de congestion de datagramme à trajets multiples], MP-QUIC [Multi-Path Quick UDP Internet Connections - connexions Internet UDP rapides à trajets multiples], UDP [User Datagram Protocol - protocole datagramme d'utilisateur], IP-in-IP [IP dans IP], GRE Tunnel Bonding [Generic Routing Encapsulation Tunnel Bonding - liaison de tunnel d'encapsulation générique de routage].

11. Procédé de transmission à trajets multiples de paquets dans un système de communication d'un dispositif de transmission à un dispositif de réception, le dispositif de transmission comprenant un programmateur de trafic à trajets multiples et le dispositif de réception comprenant un module de réordonnancement, le procédé comprenant :
la programmation de paquets, par le programmateur de trafic à trajets multiples, pour une transmission sur au moins deux trajets, chaque paquet transmis comprenant un identifiant de séquence,
le stockage temporaire des paquets transmis sur le programmateur de trafic à trajets multiples dans un tampon d'envoi pendant une quantité de temps configurable ;
la réception, par le module de réordonnancement, de paquets par l'intermédiaire des deux trajets ou plus, et le réordonnancement des paquets reçus de manière séquentielle sur la base de l'identifiant de séquence, et
le renvoi, par le dispositif de transmission, d'un paquet transmis qui n'a pas été reçu par le dispositif de réception,
l'ajustement, par le dispositif de transmission, d'un nombre de retransmissions autorisées ou l'ajustement de la dimension du tampon d'envoi pour ajuster la fiabilité de transmission du système, et
l'anticipation, par le dispositif de transmission, d'une retransmission de paquets depuis le tampon d'envoi, sur la base d'informations de couche transversale et/ou d'accusés de réception en attente, dans lequel des accusés de réception en attente sont des accusés de réception négatifs, et
dans lequel le programmateur de trafic à trajets multiples comprend en outre une interface pour l'ajustement externe de la fiabilité de transmission du système.

12. Système selon la revendication 11, dans lequel le tampon d'envoi est un tampon d'envoi individuel de trajet pour chacun des deux trajets ou plus, et chaque tampon d'envoi individuel de trajet est configuré pour stocker temporairement les paquets transmis, par l'intermédiaire de son trajet respectif, pendant une quantité de temps prédéterminée.

13. Système selon la revendication 10 ou 11, dans lequel le programmateur de trafic à trajets multiples renvoie des paquets sur un trajet différent du trajet d'origine.
